# FASCICULE DE BREVET EUROPEEN

(11) **EP 1 669 278 B1**
(45) Date de publication et mention de la délivrance du brevet: **22.10.2008**
(21) Numéro de dépôt: 05292652.4
(22) Date de dépôt: 13.12.2005
(51) Int. Cl.: B62D 25/10

(54) **Avant de véhicule automobile comportant un cadre de capot**
Frontmodul für ein Kraftfahrzeug mit einem Rahmen für die Haube
Front module of a motor vehicle comprising a bonnet frame

(30) Priorité: 13.12.2004 FR 0413231
(43) Date de publication de la demande: 14.06.2006
(73) Titulaire: COMPAGNIE PLASTIC OMNIUM, 69007 Lyon (FR)
(72) Inventeur: Delavalle, Dominique, 01160 Pont d'Ain (FR); Roux, Jean-Pierre, 69480 Pommiers (FR); Rocheblave, Laurent, 69100 Villeurbanne (FR)
(74) Mandataire: Remy, Vincent Noel Paul

(56) Documents cités:
- EP-A- 0 967 128
- DE-A- 4 417 380
- FR-A- 2 629 416
- FR-A- 2 806 999
- GB-A- 2 386 875
- US-A1- 2003 038 470

## Description

### Domaine technique

L'invention concerne un avant de véhicule automobile selon le préambule de la revendication 1.

### Etat de la technique

Actuellement, le capot moteur, lorsque le moteur est à l'avant du véhicule, est fixé sur la caisse en blanc par les charnières et la gâche de serrure qui se trouve à l'extrémité avant du compartiment moteur.

A l'avant des véhicules automobiles, il est courant que le positionnement des pièces de carrosserie s'effectue par rapport au capot car ce dernier, du fait de ses grandes dimensions, peut présenter d'importantes disparités géométriques. On positionne donc d'abord le capot puis, par rapport à ce capot, on positionne les ailes, puis les optiques, puis le bouclier et la grille d'entrée d'air ou la calandre.

Sur la chaîne de ferrage, le capot est assemblé en prenant comme référence longitudinale (direction désignée X), les charnières des portières avant (des trous pilotes sur des charnons fixes) ou en prenant comme référentiel le jeu entre l'aile et la porte, jeu qui est matérialisé par une butée ou encore par un moyen supportant le capot, reprenant comme référentiel les trous pilotes.

Le positionnement vertical du capot (selon la direction désignée Z) est indexé sur des appuis aménagés sur la caisse en blanc.

Son positionnement transversal (direction Y) résulte des fixations charnières.

De leur côté, les ailes sont mises en référence de la manière suivante :
- Selon la direction longitudinale X : à l'aide des mêmes trous pilotes.
- Selon la direction verticale Z : on utilise une plage d'appui formant une butée verticale qui ne permet aucun réglage.
- Selon la direction transversale Y : on utilise soit des trous pilotes, soit des cales référentielles de jeu par rapport au capot, soit des moyens prenant eux-même comme référentiels les trous pilotes.

Sur certains véhicules, on intercale en outre une pièce servant à la protection des piétons en cas de choc entre la caisse en blanc et l'aile.

Quoiqu'il en soit, il est nécessaire que le capot soit présent sur le véhicule assez tôt dans la chaîne de montage de ce dernier.

Le positionnement d'un capot nécessite un nombre important de points de référence et d'interfaces qui s'appuient notamment sur la caisse en blanc alors que celle-ci présente, de par sa conception, des écarts de géométrie qui vont croissant à mesure que l'on s'approche de l'extrémité avant du véhicule.

En outre, la présence du capot s'avère gênante pour réaliser certaines opérations de fixation ou de montage dans lesquelles l'accès à l'intérieur du compartiment moteur est indispensable. Il faut donc ouvrir et fermer le capot à plusieurs reprises, ce qui occasionne des manipulations indésirables.

On connaît également, de la demande de brevet français FR 2 629 416, un avant de véhicule automobile, du type comportant :
- un capot pouvant prendre au moins une position fermée,
- une unique pièce de carrosserie environnant le capot, constituant à elle seulel les deux ailes et la calandre du véhicule et supportant les charnières du capot.

Un telle pièce unique est particulièrement difficile à fabriquer du fait de ses grandes dimensions.

En outre, l'avant décrit dans ce document n'est pas compatible avec le découpage classique de l'avant d'un véhicule automobile entre pare-chocs, calandre, ailes et capot. Ainsi, l'avant décrit dans ce document nécessite une fabrication, un montage et une gestion de stock très spécifiques, ce qui rend délicate son exploitation par des moyens industriels déjà existants.

Par ailleurs, l'avant décrit dans ce document doit nécessairement être monté sur le véhicule capot ouvert.

Enfin, on connaît de DE-A1-44 17 380 un avant de véhicule automobile avec les caractéristiques du préambule de la revendication 1.

### Solution proposée par l'invention

L'invention a pour objet un avant de véhicule automobile, selon la revendication 1.

Le cadre constitue un dormant de capot.

Selon l'invention, le cadre est distinct des ailes et du capot, si bien que l'on peut le réutiliser sur différents types de véhicules. En effet, le cadre est une pièce qui est cachée par les ailes et le capot, une fois l'avant monté sur le véhicule. L'ensemble constitué par le cadre et le capot constitue un module qui peut être assemblé en poste hors chaîne.

L'assemblage hors ligne du module peut s'effectuer à l'aide d'un gabarit.

Le cadre peut être monté sur la caisse en blanc avant ou après le traitement anticorrosion par cataphorèse.

S'il est assemblé sur la caisse en blanc avant cataphorèse et si le capot vient avec le cadre, le capot sera mis en référence en Yₒ, c'est-à-dire au point milieu de l'avant du véhicule, par un centreur démontable qui permettra aussi de le maintenir dans la position d'ouverture nécessaire au bon déroulement de la cataphorèse.

Toujours si le cadre est assemblé après peinture, la serrure constituera le référentiel Yₒ du capot.

Si le cadre ne subit pas la cataphorèse parce qu'il est monté sur la caisse en blanc après ce traitement, il peut comporter un cache moteur destiné à recouvrir le compartiment moteur une fois le module monté sur la caisse en blanc.

Ce cache pourra être constitué par une peau ayant des fonctions esthétiques et d'isolation tout en permettant de réaliser la maintenance du moteur (remplissage des réservoirs, accès aux jauges), grâce à des accès permanents ou des trappes, réservés aux endroits appropriés du cache.

La présence et le montage de ce cache ne nécessitent aucune manoeuvre spécifique sur la chaîne de montage du véhicule du fait que le cache arrive sur la caisse en blanc avec le module.

Le cache sera néanmoins démontable par un garagiste pour les réparations du moteur.

Le cadre peut être monté sur la caisse en blanc avant peinture ou après peinture.

Si le cadre est monté après peinture, il n'est pas soumis à la cuisson de la peinture et peut comporter des éléments additionnels tel qu'un capotage moteur et/ou une serrure.

Un des avantages de l'avant selon l'invention est qu'il permet de moins endommager la caisse en blanc lors des chocs et en particulier lors des chocs avec des piétons.

Un autre avantage est que le cadre crée une interface entre le style extérieur du véhicule et la caisse en blanc, ce qui permet de faire évoluer le style (quelquefois appelé « design ») sans modifier la structure du véhicule. En particulier, une structure commune peut servir de base à deux véhicules différents.

Grâce à l'invention, on peut rapporter sur le véhicule, soit le cadre seul, soit le cadre muni du capot, mais dans les deux cas les nombreuses opérations d'ouverture et de fermeture du capot peuvent être évitées car la seule présence du cadre sur la caisse du véhicule suffit à positionner les ailes, les optiques et le bouclier avant.

### Modes de réalisation particuliers

- Le cadre comporte une traverse avant, à laquelle la serrure capot peut être fixée, et qui peut servir à la mise en référence de la peau du bouclier avant.
- Le cadre peut être constitué par un cadre structurel formé par la traverse avant, des supports d'ailes et un auvent situé à la base du pare-brise lorsque le cadre est monté sur la caisse. Cet auvent peut contenir différents organes fonctionnels tels que des moteurs d'essuie-glaces, un moteur du circuit de ventilation d'air de l'habitacle ou un compresseur du circuit de climatisation de l'habitacle.
- Chacun des constituants du cadre peut comporter des airbags ou des mécanismes du soulèvement du capot afin d'assurer une protection des piétons en cas de choc.
- D'éventuels mécanismes de soulèvement de capot ou des airbags comportent des actionneurs qui, grâce au cadre, peuvent être facilement liés mécaniquement et/ou électroniquement. Le bon fonctionnement de ces actionneurs peut ainsi être contrôlé avant assemblage du module sur la caisse en blanc.
- Le cadre supporte des charnières pour le pivotement du capot entre une position ouverte et une position fermée et une serrure pour le maintien du capot en position fermée.

### Description d'un exemple

Afin de mieux faire comprendre l'invention, on va en décrire maintenant un exemple de réalisation donné à titre d'exemple non limitatif de la portée de l'invention, en référence aux dessins annexés dans lesquels :
- la figure 1 est une vue en section selon un plan vertical longitudinal de la région d'un module de capot avant d'un véhicule automobile,
- la figure 2 est une vue de dessus du module de capot de la figure 1.

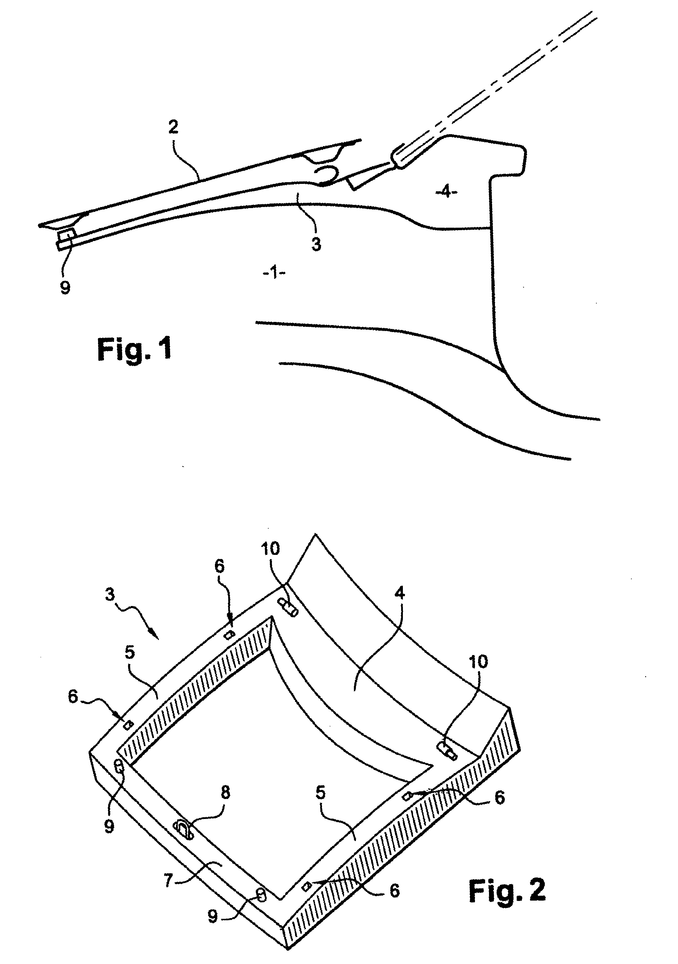

Sur la figure 1, on voit la partie supérieure d'un compartiment moteur 1 de véhicule automobile qui est fermé supérieurement par un capot 2. Ce capot est monté sur un cadre 3 rigide et structurel, le terme "structurel" signifiant que le cadre peut supporter le capot et éventuellement d'autres organes fonctionnels du véhicule.

Ce cadre 3 comprend, à l'arrière du capot, une cassette d'auvent (quelquefois désignée auvent) 4 qui forme un compartiment, séparé du compartiment moteur 1, apte à loger des organes fonctionnels (non représentés) tels que des réservoirs (lave-glace, liquide de frein), une batterie, des moteurs d'essuie-glaces ou encore un compresseur de circuit de climatisation.

Des charnières 10 de manoeuvre du capot sont prévues sur la cassette d'auvent.

Partant de chaque extrémité de la cassette d'auvent 4, deux bras latéraux 5 bordent le capot en longeant sensiblement sa périphérie. Ces bras latéraux permettent, outre la fixation d'éventuels organes fonctionnels supplémentaires, la mise en référence des pièces de carrosserie environnantes, telles que les ailes, par rapport au capot. Cette mise en référence est réalisable que le capot soit présent ou absent, ouvert ou fermé, grâce à des points de mise en référence 6 qui sont prévus sur les montants latéraux.

Des charnières pour le capot sont également portées par le cadre à l'intersection entre l'auvent et les montants latéraux.

Enfin, le cadre est fermé par une traverse avant 7 qui se trouve sous le bord avant du capot 2 et porte une serrure de verrouillage 8 du capot en position fermée et d'éventuelles butées 9 de claquage du capot, ainsi que d'autres organes fonctionnels, comme par exemple le radiateur du circuit de refroidissement du moteur. La traverse avant 7 permet la mise en référence de pièces de carrosserie environnantes telle que le bouclier avant.

L'ensemble du cadre, des organes qu'il contient et du capot constitue un module de capot.

Ce module de capot est de préférence assemblé en dehors de la chaîne de montage du véhicule et rapporté sur ce dernier le plus en aval possible de la chaîne. Dans cette hypothèse, le module de capot peut intégrer le capot lui-même ainsi qu'un nombre élevé d'organes fonctionnels qui sont ainsi rapportés sur le véhicule en même temps que le module de capot.

Une fois que le module de capot est assemblé sur le véhicule automobile et que les pièces de carrosserie sont fixées, on obtient un avant selon l'invention comprenant le capot 2, le cadre 3, les ailes et le pare-chocs.

Une autre utilisation avantageuse du module consiste à intégrer dans ses bras latéraux 5 des dispositifs de protection des piétons en cas de choc.

Il est bien entendu que le mode de réalisation qui vient d'être décrit ne présente aucun caractère limitatif de la portée de l'invention.

## Revendications

1. Avant de véhicule automobile, du type comportant :
- un capot (2) pouvant prendre au moins une position fermée,
- un cadre apte à supporter le capot (2),
dans lequel,
- le cadre s'étend le long de la périphérie du capot (2) en position fermée,
- une pluralité de pièces de carrosserie environnent le capot, dont deux ailes et un pare-chocs,
- le cadre est distinct des ailes et du pare-chocs,
- le cadre comporte des points (6) de mise en référence des pièces de carrosserie environnantes,
**caractérisé en ce que :**
- le cadre comprend deux bras latéraux (5) qui bordent le capot (2) en longeant sensiblement sa périphérie et qui comprennent des points (6) de mise en référence des ailes.

2. Avant selon la revendication 1, dans lequel le cadre comporte en outre un cache moteur destiné à recouvrir le compartiment moteur une fois le cadre monté sur la caisse en blanc.

3. Avant selon la revendication 2, dans lequel le cache est constitué par une peau ayant des fonctions esthétiques et d'isolation tout en permettant de réaliser la maintenance du moteur, grâce à des accès permanents ou des trappes, réservés aux endroits appropriés du cache.

4. Avant selon l'une quelconque des revendications 1 à 3, dans lequel le cadre comporte une traverse avant, à laquelle la serrure capot peut être fixée, et qui peut servir à la mise en référence d'une peau du pare-chocs avant.

5. Avant selon la revendication 4, dans lequel le cadre est un cadre structurel formé par la traverse avant, des supports d'ailes et un auvent situé à la base d'un pare-brise lorsque le cadre est monté sur une caisse de véhicule automobile.

6. Avant selon la revendication 5, dans lequel le cadre contient différents organes fonctionnels tels que des moteurs d'essuie-glaces, un moteur du circuit de ventilation d'air de l'habitacle ou un compresseur du circuit de climatisation de l'habitacle.

7. Avant selon l'une quelconque des revendications 1 à 6, dans lequel chacun des constituants du cadre peut comporter des airbags ou des mécanismes du soulèvement du capot afin d'assurer une protection des piétons en cas de choc.

8. Avant selon l'une quelconque des revendications 1 à 7, dans lequel le cadre supporte des charnières pour le pivotement du capot entre une position ouverte et une position fermée et une serrure pour le maintien du capot en position fermée.

9. Avant selon l'une quelconque des revendications 1 à 8, dans lequel le cadre (3) comprend une cassette d'auvent (4) située à la base d'un pare-brise et apte à contenir différents organes fonctionnels tels que des moteurs d'essuie-glaces, un moteur du circuit de ventilation d'air de l'habitacle ou un compresseur du circuit de climatisation de l'habitacle.

## Claims

1. A motor vehicle front of the type comprising:
- a hood (2) capable of occupying at least a closed position;
- a frame suitable for supporting the hood (2),
in which :
- the frame extends along the periphery of the hood (2) in the closed position;
- a plurality of bodywork parts surround the hood, including two fenders and a bumper;
- the frame is distinct from the fenders and the bumper;
- the frame includes points (6) for putting surrounding bodywork parts into reference positions,
**characterized in that :**
- the frame includes two lateral arms (5) running along either side of the hood, extending substantially along its periphery, and comprising points (6) for putting fenders into reference positions.

2. A front according to claim 1, in which the frame further includes an engine cover for covering the engine compartment once the frame has been mounted on the body-in-white.

3. A front according to claim 2, in which the cover is constituted by a skin presenting appearance and insulation functions, while also enabling maintenance to be carried out on the engine, via permanent accesses or hatches made in appropriate locations of the cover.

4. A front according to any one of claims 1 to 3, in which the frame includes a front cross-member, to which the lock for the hood can be secured, and which can serve for putting a front bumper skin into a reference position.

5. A front according to claim 4, in which the frame is a structural frame formed by the front cross-member, fender supports, and a scuttle situated at the base of a windshield once the frame is mounted on a motor vehicle body.

6. A front according to claim 5, in which the frame contains various functional members such as windshield wiper motors, a motor for a cabin air ventilation circuit, or a compressor for a cabin air-conditioning circuit.

7. A front according to any one of claims 1 to 6, in which each of the components of the frame can include airbags or hood-raising mechanisms in order to protect pedestrians in the event of an impact.

8. A front according to any one of claims 1 to 7, in which the frame supports hinges to enable the hood to pivot between an open position and a closed position, and a lock for holding the hood in the closed position.

9. A front according to any one of claims 1 to 8, in which the frame (3) includes a scuttle (4) situated at the base of a windshield and suitable for containing various functional members such as windshield wiper motors, a motor for a cabin air ventilation circuit, or a compressor for a cabin air-conditioning circuit.

## Patentansprüche

1. Vorderteil eines Kraftfahrzeugs, jener Art umfassend:
- eine Haube (2), die wenigstens eine geschlossene Stellung einnehmen kann,
- einen Rahmen, der die Haube (2) tragen kann,
wobei,
- sich der Rahmen entlang der Peripherie der Haube (2) in geschlossener Stellung erstreckt,
- eine Vielzahl von Karosserieteilen die Haube umgibt, darunter zwei Kotflügel und ein Stoßfänger,
- der Rahmen von den Kotflügeln und vom Stoßfänger verschieden ist,
- der Rahmen Punkte (6) zum Ausrichten der umgebenden Karosserieteile umfasst,
**dadurch gekennzeichnet, dass:**
- der Rahmen zwei Seitenschenkel (5) umfasst, welche die Haube (2) durch Erstrecken im Wesentlichen längs ihrer Peripherie einfassen und die Punkte (6) zum Ausrichten der Kotflügel umfassen.

2. Vorderteil nach Anspruch 1, wobei der Rahmen zusätzlich eine Motorverkleidung umfasst, dazu bestimmt, den Motorraum abzudecken, wenn der Rahmen auf der rohen Karosserie montiert ist.

3. Vorderteil nach Anspruch 2, wobei die Verkleidung aus einer Haut mit ästhetischen und isoliertechnischen Funktionen besteht, die gleichzeitig durch dauerhafte Zugänge oder Klappen, ausgespart an geeigneten Stellen der Verkleidung, die Durchführung der Motorwartung ermöglicht.

4. Vorderteil nach einem der Ansprüche 1 bis 3, wobei der Rahmen einen vorderen Querträger umfasst, an dem die Haubenverriegelung befestigt werden kann und der zum Ausrichten einer Haut des vorderen Stoßfängers dienen kann.

5. Vorderteil nach Anspruch 4, wobei der Rahmen ein durch den vorderen Querträger, die Kotflügelträger und einen an der Basis einer Windschutzscheibe angeordneten Windlauf gebildeter Strukturrahmen ist, wenn der Rahmen an einer Karosserie eines Kraftfahrzeugs montiert ist.

6. Vorderteil nach Anspruch 5, wobei der Rahmen unterschiedliche Funktionsorgane wie Scheibenwischermotoren, einen Lüftungskreislaufmotor oder einen Kompressor des Klimaanlagenkreislaufs aufweist.

7. Vorderteil nach einem der Ansprüche 1 bis 6, wobei jeder der Bestandteile des Rahmens Airbags oder Vorrichtungen zum Anheben der Haube umfassen kann, um einen Schutz von Fußgängern im Falle eines Aufpralls zu gewährleisten.

8. Vorderteil nach einem der Ansprüche 1 bis 7, wobei der Rahmen Scharniere zum Klappen der Haube zwischen einer offenen Stellung und einer geschlossenen Stellung und eine Verriegelung zum Halten der Haube in geschlossener Stellung trägt.

9. Vorderteil nach einem der Ansprüche 1 bis 8, wobei der Rahmen (3) einen an der Basis einer Windschutzscheibe angeordneten Windlaufkasten (4) umfasst, der unterschiedliche Funktionsorgane wie Scheibenwischermotoren, einen Lüftungskreislaufmotor oder einen Kompressor des Klimaanlagenkreislaufs enthalten kann.
